# EUROPÄISCHE PATENTSCHRIFT

(11) **EP 2 566 921 B1**
(45) Veröffentlichungstag und Bekanntmachung des Hinweises auf die Patenterteilung: **16.04.2014**
(21) Anmeldenummer: 11715558.0
(22) Anmeldetag: 21.04.2011
(51) Int. Cl.: C08L 33/18, C08L 25/12, C08L 33/00, C08L 33/08, C08L 35/04, C08L 35/06

(54) **FORMMASSE MIT VERMINDERTER LICHTSTREUUNG**
MOULDING COMPOSITION WITH REDUCED LIGHT SCATTERING
MASSE DE MATIÈRE À MOULER À DISPERSION DE LA LUMIÈRE RÉDUITE

(30) Priorität: 07.05.2010 EP 10162328
(43) Veröffentlichungstag der Anmeldung: 13.03.2013
(73) Patentinhaber: Styrolution GmbH, 60325 Frankfurt am Main (DE)
(72) Erfinder: NIESSNER, Norbert, 67159 Friedelsheim (DE)
(74) Vertreter: Jacobi, Markus Alexander
(86) Internationale Anmeldenummer: PCT/EP2011/056459
(87) Internationale Veröffentlichungsnummer: WO 2011/138185

(56) Entgegenhaltungen:
- EP-A1- 0 534 244
- EP-A1- 0 603 674
- EP-A2- 0 450 485
- EP-A2- 0 725 094
- WO-A1-2008/104481
- DE-A1- 19 617 068
- DE-A1- 19 630 097

## Beschreibung

Die vorliegende Erfindung betrifft eine Formmasse, umfassend
(A) 50 bis 70 Gew.-% eines Copolymers enthaltend als Grundbausteine wenigstens ein α,β-ungesättigtes Monocarbonsäurenitril in Mengen von mindestens 30 Gew.-%, bezogen auf das Gesamtgewicht der Komponente (A), und wenigstens ein aromatisches Vinylmonomer als Komponente (A),
(B) 20 bis 30 Gew.-% eines Pfropfkautschuks mit einer mittleren Teilchengröße von 100 bis 280 nm, enthaltend eine Pfropfgrundlage b1, aufgebaut aus wenigstens einem α,β-ungesättigten Monocarbonsäureester, und mindestens eine Pfropfschale b2, aufgebaut aus wenigstens einem aromatischen Vinylmonomer und wenigstens einem α,β-ungesättigten Monocarbonsäurenitril als Komponente (B),
(C) 10 bis 20 Gew.-% eines Pfropfkautschuks mit einer mittleren Teilchengröße von 410 bis 1000 nm, enthaltend eine Pfropfgrundlage c1, aufgebaut aus wenigstens einem α,β-ungesättigten Monocarbonsäureester, und mindestes eine Pfropfschale c2 aufgebaut aus wenigstens einem aromatischen Vinylpolymer und wenigstens einem α,β-ungesättigten Monocarbonsäurenitril als Komponente (C) und
(D) 0 bis 10 Gew.-% Additive als Komponente (D),
   wobei die Summe der Mengen der Komponenten (A), (B), (C) und (D) 100 Gew.-% beträgt,
sowie Verfahren zur Herstellung dieser Formmassen, die Verwendung dieser Formmassen zur Herstellung von Folien, Formkörpern oder Fasern sowie diese Folien, Formkörper oder Fasern selbst.

Um zu schlagzähen, thermoplastischen Formmassen zu gelangen, ist es bekannt, z.B. Pfropfkautschuke zu den bei Raumtemperatur spröden, die Matrix bildenden Polymerisaten zu geben. Die Herstellung und Verwendung solcher Pfropfkautschuke ist beispielsweise in DE-A-12 60 135, DE-A-23 11 129 und EP 6503 A1 beschrieben. In der Regel nimmt die schlagzäh modifizierende Wirkung der Pfropfkautschuke mit zunehmender Größe der Kautschukpartikel zu. Bei Einsatz von kleinteiligen Pfropfkautschuken kann neben einer geringeren Schlagzähmodifizierung außerdem das Problem bestehen, daß die Zähigkeit der schlagzähmodifizierten Formmassen stark von der Verarbeitungstemperatur der Formmassen abhängt.

Es ist ferner bekannt, dass schlagzäh modifizierte Formmassen auf Basis von Styrol-Acrylnitril-Copolymeren ("SAN"), insbesondere butadien- oder acrylesterkautschukmodifizierte Formmassen wie Acrylnitril-Butadien-Styrol-Copolymere ("ABS") und Acrylnitril-Styrol-Acrylester-Copolymere ("ASA"), besonders dann gut einfärbbar sind, wenn die Lichtstreuung dieser Formmassen minimiert wird.

Die Verringerrung der Lichtstreuung kann beispielsweise dadurch geschehen, dass a) die Brechungsindizes von kontinuierlicher Phase (SAN-Matrix) und disperser Phase (Kautschukpartikel) möglichst gut angeglichen werden, und/oder b) die Teilchengröße der dispersen Phase weitgehend reduziert wird. Variante a) kann u. a. dadurch realisiert werden, dass man der SAN-Matrix des ASA oder ABS eine mischbare Komponente, beispielsweise ein Polymethyl(meth)acrylat ("PMMA") zumischt, die den Brechungsindex der SAN-Matrix reduziert. Nachteilig bei diesem Vorgehen ist die abnehmende Zähigkeit der Formmasse mit zunehmendem PMMA- Anteil. Variante b) hat den Nachteil, dass die für optimale Zähigkeits/Steifigkeits-Eigenschaften üblicherweise notwendigen großen Teilchengrößen des Kautschuks das Licht sehr stark streuen.

Formmassen mit verbesserter Schlagzähigkeit bei gleichbleibend guter Einfärbbarkeit können durch Zumischen einer großteiligen zu einer kleinteiligen Kautschukkomponente (bimodale Kautschukteilchen) erhalten werden, wie beispielsweise in EP 6503 A1, EP 450 485 A2, EP 643 104 A2 oder WO 2010/023114 beschrieben. Oftmals reicht die dort erzielte Schlagzähigkeit, insbesondere die Tieftemperaturschlagzähigkeit, der Massen für hohe Beanspruchung aber nicht aus. Zudem kann die Schlagzähigkeit nicht durch beliebige Zugabe der großteiligen Kautschukpartikel erhöht werden, da sonst die Einfärbbarkeit deutlich verschlechtert wird.

Alle vorstehend genannten Dokumente geben keinerlei Hinweis, wie der speziell bei gedeckten Farben zu beobachtende "Regenbogen-Effekt", eine besondere Art der Lichtstreuung, vermieden werden kann. Dieser Effekt ist u. a. beschrieben in plastics - The customer magazine from BASF 1/2009, S. 36. Hier wird dieser Effekt auf hohe Scherraten an grossen Kautschukteilchen zurückgeführt. Es wird jedoch kein Hinweis darauf gegeben, wie groß Kautschukteilchen sein dürfen, um diesen Effekt nicht mehr zu zeigen, ohne aber in puncto Zähigkeit und Steifigkeit zu verschlechterten Eigenschaften zu führen.

Aufgabe der vorliegenden Erfindung war es daher thermoplastische Formmassen zur Verfügung zu stellen, die vor allem bei tiefen Temperaturen, beispielsweise unter 0°C, insbesondere unabhängig von der Verarbeitungstemperatur, bessere Schlagzähigkeit, Spannungsrißkorrosion und insbesondere bessere multiaxiale Zähigkeiten aufweisen und bei Einfärbung, speziell mit gedeckten Farben, bevorzugt dunkle Farbtönen, eine verringerte Lichtstreuung, insbesondere keinerlei Regenbogeneffekt, zeigen.

Demgemäß wurde die eingangs genannte Formmasse gefunden, wobei erfindungswesentlich ist, dass das Gewichtsverhältnis der Komponente (B) zur Komponente (C) im Bereich von 3:1 bis 1:1 liegt, und dass der Gehalt des α,β-ungesättigten Monocarbonsäurenitrils in Komponente (B), in Gew.-% bezogen auf das Gesamtgewicht der Pfropfschale b2, und in Komponente (C), in Gew.-% bezogen auf das Gesamtgewicht der Pfropfschale c2, jeweils 5 bis 10 %-Punkte unter dem Gehalt an α,β-ungesättigtem Monocarbonsäurenitril der Komponente (A), in Gew.-% bezogen auf das Gesamtgewicht der Komponente (A), liegt.

Weiterhin wurden Verfahren zur Herstellung dieser Formmasse, die Verwendung dieser Formmasse zur Herstellung von Folien, Formkörpern oder Fasern sowie diese Folien, Formkörper oder Fasern selbst gefunden.

Die erfindungsgemäßen Formmassen weisen gegenüber bekannten Formmassen, vor allem bei tiefen Temperaturen, beispielsweise unter 0°C, bevorzugt unabhängig von der Verarbeitungstemperatur, bessere Schlagzähigkeit, Spannungsrißkorrosion und insbesondere bessere multiaxiale Zähigkeiten auf und zeigen bei Einfärbung, speziell mit gedeckten Farben, bevorzugt dunkle Farbtönen, eine verringerte Lichtstreuung, insbesondere keinerlei Regenbogeneffekt.

Die erfindungsgemäßen Gegenstände, Verfahren und Verwendungen werden im folgenden beschrieben.

Im folgenden bedeutet der Begriff Formmasse eine Mischung umfassend die Komponenten (A), (B), (C) und gegebenenfalls weiterer Additive (D).

### Komponente (A):

Als Komponente (A) umfasst die erfindungsgemäße Formmasse 50 bis 70 Gew.-%, jeweils bezogen auf das Gesamtgewicht der Komponenten (A) bis (D), eines Copolymers enthaltend wenigstens ein α,β-ungesättigtes Monocarbonsäurenitril und wenigstens ein aromatisches Vinylmonomer.

In der erfindungsgemäßen Formmasse ist Komponente (A) die matrixbildende Hartkomponente, d.h. Komponente (A) weist einen höheren Härtegrad auf als die Komponenten (B) oder (C).

Geeignete α,β-ungesättigte Monocarbonsäurenitrile sind ausgewählt aus der Gruppe bestehend aus Acrylnitril, Methacrylnitril und Mischungen davon.

Als geeignete aromatische Vinylmonomere in Komponente (A) können Verbindungen der allgemeinen Formel (I) 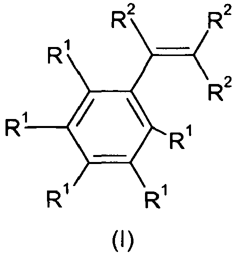 eingesetzt werden, wobei
- R¹: unabhängig voneinander Wasserstoff, C₁-C₁₀-Alkyl, C₁-C₁₀-Cycloalkyl, C₁-C₁₀-Alkoxy, C₆-C₁₈-Alkyl, C₆-C₁₈-Ar-Alkyl, C₆-C₁₈-Aryloxy, Chlor oder Brom und
- R²: unabhängig voneinander Wasserstoff, C₁-C₁₀-Alkyl, Chlor oder Brom bedeuten.

Bevorzugte aromatische Vinylmonomere der allgemeinen Formel (I) sind ausgewählt aus der Gruppe bestehend aus Styrol, 3-Methylstyrol, 3,5-Dimethylstyrol, 4-n-Propylstyrol, α-Methylstyrol, α-Methylvinyltoluol, α-Chlorstyrol, α-Bromstyrol, Dichlorstyrol, Dibromstyrol und Mischungen davon. Besonders bevorzugte aromatische Vinylmonomere sind Styrol und/oder α-Methylstyrol.

Komponente (A) kann nach allen dem Fachmann bekannten Methoden erhalten werden, beispielsweise radikalische, anionische oder kationische Polymerisation. Bevorzugt wird Komponente (A) durch eine kontinuierliche oder nicht kontinuierliche Polymerisation in Substanz oder in Lösung erhalten. In einer bevorzugten Ausführungsform enthält die Polymerisationslösung als Lösungsmittel 0 bis 20 Gew.-% eines aromatischen Lösungsmittels, beispielsweise Toluol, Xylole oder Ethylbenzol. Komponente (A) kann nach einem verfahren erhalten werden, wie es beispielsweise im Kunststoff-Handbuch, Vieweg-Daumiller, Band V, (Polystyrol), Carl-Hanser-Verlag, München 1969, Seiten 122 f. beschrieben wird. Die Hartkomponente (A) ist auch kommerziell erhältlich.

In einer bevorzugten Ausführungsform enthält Komponente (A) als α,β-ungesättigtes Monocarbonsäurenitril Acrylnitril und als aromatisches Vinylmonomer Styrol und/oder α-Methylstyrol.

Somit ist in einer besonders bevorzugten Ausführungsform Komponente (A) der erfindungsgemäßen Formmasse ein SAN oder ein AMSAN-Copolymer oder ein Styrol-α-Methylstyrol-Acrylnitril-Copolymer ("SAMSAN"), welches aus Acrylnitril und α-Methylstyrol und ggf. Styrol aufgebaut ist. In diesem SAN bzw. AMSAN- bzw. SAM-SAN-Copolymer liegt Acrylnitril in einem Anteil von 30 bis 40 Gew.-%, bevorzugt 30 bis 35 Gew.-% und Styrol bzw. α-Methylstyrol in einem Anteil von 60 bis 70 Gew.-%, bevorzugt 65 bis 70 Gew.-% vor, wobei die Summe der Mengen der genannten Monomere 100 Gew.-% ergibt.

Die gewichtsmittlere Molekularmasse M_{w} des als Komponente (A) eingesetzten Polymers beträgt bevorzugt 50000 bis 250000 g/mol, besonders bevorzugt 90000 bis 200000 g/mol, jeweils gemessen durch GPC mit UV- Detektion (gegen Polystyrol-Eichstandards mit einer 5*MixedB-Säule).

Die zahlenmittlere Molekularmasse Mₙ des als Komponente (A) eingesetzten Polymers beträgt bevorzugt 20000 bis 100000 g/mol, besonders bevorzugt 30000 bis 80000 g/mol, jeweils gemessen durch GPC mit UV-Detektion.

Die Hartkomponente (A) ist kommerziell bespielsweise unter der Marke Luran^{®} von der BASF SE erhältlich.

### Komponente (B):

Komponente (B) in der erfindungsgemäßen Formmasse ist ein Pfropfkautschuk mit einer mittleren Teilchengröße von 100 bis 280 nm, bevorzugt 100 bis 250 nm, besonders bevorzugt 100 bis 200 nm, enthaltend eine Pfropfgrundlage b1 aufgebaut aus wenigstens einem α,β-ungesättigten Monocarbonsäureester und mindestens eine Pfropfschale b2 aufgebaut aus wenigstens einem aromatischen Vinylmonomer und wenigstens einem α,β-ungesättigten Monocarbonsäurenitril.

Als Komponente (B) umfasst die erfindungsgemäße Formmasse 20 bis 30 Gew.-%, jeweils bezogen auf das Gesamtgewicht der Komponenten (A) bis (D), eines Pfropfkautschuks, welcher eine Pfropfgrundlage b1 und mindestens eine Pfropfschale b2 aufweist.

Der α,β-ungesättigte Monocarbonsäureester ist abgeleitet von einer α,β-ungesättigten Monocarbonsäure, ausgewählt aus der Gruppe bestehend aus Methacrylsäure, Acrylsäure und Mischungen davon. Um den α,β-ungesättigten Monocarbonsäureester zu erhalten, wird die genannte α,β-ungesättigte Monocarbonsäure mit einem Alkohol umgesetzt. Dieser Alkohol ist ein gesättigter oder ungesättigter aliphatischer Alkohol mit 1 bis 12 Kohlenstoffatomen. In einer bevorzugten Ausführungsform weist dieser Alkohol 1 bis 8, besonders bevorzugt 2 bis 6 Kohlenstoffatome auf. Die Alkoholkomponente des α,β-ungesättigten Monocarbonsäureesters kann dabei linear oder verzweigt aufgebaut sein. In einer bevorzugten Ausführungsform ist der Alkoholrest des Esters linear aufgebaut. Als C₁-C₁₂-Alkylester der Acrylsäure eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

In einer besonders bevorzugten Ausführungsform ist der α,β-ungesättigte Monocarbonsäureester Acrylsäure-n-butylester. Daher ist einer bevorzugten Ausführungsform die Pfropfgrundlage b1 ein Polyacrylsäurebutylester. In einer weiteren bevorzugten Ausführungsform ist das als Pfropfgrundlage b1 eingesetzte Polyacrylsäurebutylester quervernetzt. Diese Quervernetzung kann durch alle dem Fachmann bekannte Verfahren durchgeführt werden, beispielsweise durch Zusatz von vernetzenden Monomeren. Solche Monomere sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohol, siehe DE-OS 12 60 135), der unter dem Namen Dihydrodicyclopentadienylacrylat (DCPA) bekannt ist, sowie die Allylester der Acrylsäure und der Methacrylsäure.

Die in Komponente (B) eingesetzte Pfropfgrundlage b1 weist in einer bevorzugten Ausführungsform einen Quellungsindex von 5 bis 35, besonders bevorzugt 10 bis 18, ganz besonders bevorzugt 12 bis 16 auf. Der Quellungsindex ist ein Maß für die Quellbarkeit eines Polymers durch ein Lösungsmittel. Übliche Quellungsmittel sind beispielsweise Methyl-ethylketon oder Toluol. Die Bestimmung des Quellungsindex geschieht beispielsweise nach einem Verfahren, bei dem ca. 0,2 g des Feststoffes einer durch Verdampfen des Wassers verfilmten Pfropfgrundlagen-Dispersion in einer Menge von z.B. 50 g Toluol gequollen werden. Nach z.B. 24 Stunden wird das Toluol abgesaugt und die Probe ausgewogen. Nach dem Trocknen der Probe im Vakuum wird diese erneut ausgewogen. Der Quellungsindex ist das Verhältnis der Auswaage nach dem Quellungsvorgang zu der Auswaage trocken nach der erneuten Trocknung.

Die in Komponente (B) eingesetzte Pfropfgrundlage b1 weist in einer weiteren bevorzugten Ausführungsform einen Gelgehalt von mehr als 80%, bevorzugt mehr als 90%, besonders bevorzugt mehr als 94% auf. Der Gelgehalt ist derjenige Produktgehalt, der vernetzt und damit in einem Lösungsmittel nichtlöslich ist. Der Gelgehalt wird vorzugsweise im gleichen Lösungsmittel wie der Quellungsindex bestimmt. Der Gelgehalt errechnet sich aus dem Verhältnis der Trockenauswaage nach dem Quellschritt zur Einwaage vor dem Quellschritt (x 100%).

Die in Komponente (B) vorliegende Pfropfgrundlage b1 hat im Allgemeinen eine mittlere Teilchengröße von 50 bis 170 nm, bevorzugt 60 bis 150 nm, besonders bevorzugt 70 bis 130 nm.

Alle im Rahmen dieser Anmeldung genannten mittleren Teilchengrößen sind die mittleren Teilchendurchmesser d₅₀ (Gewichtsmittel) und werden mithilfe der Ultrazentrifuge gemäß der Methode von W. Scholtan and H. Lange, Kolloid-Z. and Z. Polymere 250 (1972), 782-796 bestimmt. Die Ultrazentrifugen-Messung ergibt die integrale Massenverteilung der Teilchen einer Probe. Der mittlere Teilchendurchmesser d₅₀ ist definiert als der Durchmesser, bei dem 50 Gew.-% der Teilchen einen kleineren und 50 Gew.-% der Teilchen einen größeren Durchmesser haben.

In dem als Komponente (B) eingesetzten Pfropfkautschuk liegt des weiteren mindestens eine Pfropfschale b2 aufgebaut aus wenigstens einem aromatischen Vinylmonomer und wenigstens einem α,β-ungesättigten Monocarbonsäurenitril vor. Das wenigstens eine aromatische Vinylmonomer in der Pfropfschale b2 entspricht in einer bevorzugten Ausführungsform ebenfalls Verbindungen der allgemeinen Formel (I) mit den dort angegebenen Bedeutungen für R¹ und R². In einer besonders bevorzugten Ausführungsform ist das wenigstens eine aromatische Vinylmonomer in der Pfropfschale b2 ausgewählt aus Styrol, α-Methylstyrol und Mischungen davon.

Das in der Pfropfschale b2 enthaltene α,β-ungesättigte Monocarbonsäurenitril ist in einer bevorzugten Ausführungsform ausgewählt aus Acrylnitril oder Methacrylnitril oder Mischungen davon. Bevorzugt wird Acrylnitril verwendet.

Das Verhältnis von aromatischem Vinylpolymer zu α,β-ungesättigtem Monocarbonsäurenitril beträgt in der Pfropfschale b2 bevorzugt 5:1 bis 1:1, besonders bevorzugt 4:1 bis 2:1, ganz besonders bevorzugt 3,5:1 bis 2,5:1.

In Komponente (B) liegt die Pfropfgrundlage b1 in einer Menge von 40 bis 80, bevorzugt 50 bis 70, besonders bevorzugt 60 Gew.-%, bezogen auf Komponente (B), vor. Die Pfropfschale b2 liegt in einer bevorzugten Ausführungsform in einer Menge von 20 bis 60, bevorzugt 30 bis 50, besonders bevorzugt 40 Gew.-%, jeweils bezogen auf Komponente (B) vor. Die Mengen von Pfropfgrundlage b1 und Pfropfschale b2 addieren sich jeweils zu 100 Gew.-%.

Somit wird in einer ganz besonders bevorzugten Ausführungsform als Komponente (B) ein Pfropfkautschuk eingesetzt, welcher als Pfropfgrundlage b1 einen quervernetzten Polyacrylsäurebutylester und als Pfropfschale b2, ein Copolymer aus Styrol und Acrylnitril aufweist. Die Pfropfschale b2 kann dabei teilweise oder auch vollständig auf die Pfropfgrundlage b1 aufgepfropft sein.

Verfahren zur Herstellung eines in der erfindungsgemäßen Formmasse als Komponente (B) vorliegenden Pfropfkautschuks sind dem Fachmann bekannt.

Zur Herstellung des Pfropfpolymerisats (B) wird bevorzugt Kaliumperoxodisulfat als Radikalinitiator eingesetzt. Es kann auch Natrium- und/oder Ammoniumperoxodisulfat eingesetzt werden. Es ist auch möglich ein Redox-Initiatorsystem einzusetzen, insbesondere enthaltend ein organisches Peroxid sowie mindestens ein Reduktionsmittel.

Geeignete organische Peroxide sind ausgewählt aus der Gruppe: Di-tert.-butylperoxid, Cumolhydroperoxid, tert.-Butylhydroperoxid und p-Menthanhydroperoxid oder Gemischen hieraus. Als Reduktionsmittel wird in der Regel mindestens eine wasserlösliche Verbindung mit reduzierender Wirkung verwendet, ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

In der Regel beträgt die Menge des eingesetzten Radikalinitiators, bezogen auf die Monomergesamtmenge, 0,01 bis 5 Gew.-%, bevorzugt 0,1 bis 3 Gew.-% und besonders bevorzugt 0,2 bis 1,5 Gew.-%.

Geeignete Herstellungsverfahren für die Pfropfcopolymerisate (B) sind zum Beispiel die Emulsionspolymerisation, Lösungspolymerisation, Suspensionspolymerisation oder Massepolymerisation, wobei die Pfropfcopolymerisate (B) vorzugsweise durch wässrige radikalische Emulsionspolymerisation hergestellt werden. Geeignete Polymerisationsverfahren werden unter anderem beschrieben in WO-A 2002/10222, DE-A 28 26 925 sowie in EP-A 022 200.

Zur Herstellung des Pfropfpolymerisats (B) kann eine Emulsionspolymerisation unter Verwendung eines Redox-Initiatorsystem enthaltend Cumolhydroperoxid, Dextrose sowie Eisen(II)salz oder unter Verwendung eines Peroxids, beispielsweise Kaliumperoxodisulfat, durchgeführt werden.

Die Herstellung der Pfropfgrundlage b1 kann beispielsweise durch radikalisch initiierte wässrige Emulsionspolymerisation erfolgen, indem eine Teilmenge der Monomeren in einem wässrigen Reaktionsmedium vorgelegt wird und die gegebenenfalls verbliebene Restmenge an Monomeren im wässrigen Reaktionsmedium nach Initiierung der radikalischen Polymerisationsreaktion zugegeben wird. Es ist auch möglich, im wässrigen Reaktionsmedium wenigstens eine Teilmenge des radikalischen Polymerisationsinitiators und gegebenenfalls weiterer Hilfsstoffe vorzulegen, das erhaltene wässrige Reaktionsmedium auf Polymerisationstemperatur zu bringen und bei dieser Temperatur die Monomeren dem wässrigen Reaktionsmedium zuzufügen. Dabei kann die Zuführung auch in Form einer Mischung erfolgen, beispielsweise als wässrige Monomeremulsion.

In einer bevorzugten Ausführungsform der Erfindung wird als Radikalinitiator bei der Herstellung der Pfropfgrundlage b1 ein Peroxodisulfat, insbesondere Kaliumperoxodisulfat (KPS), in Verbindung mit weiteren Hilfskomponenten eingesetzt. Es können unter anderem ein Puffer (zum Beispiel Bicarbonat) und Kaliumstearat oder K30^{®} als Seife zum Einsatz kommen.

Als Molekulargewichtsregler (MR) kann beispielsweise tertiär-Dodecylmercaptan (TDM) zum Einsatz kommen, welches kontinuierlich oder auch zu verschiedenen Zeitpunkten während des Herstellprozesses des Kautschuklatex zugegeben werden kann.

Die Art der Zugabe des Reglers kann sich auf die Eigenschaften des Endproduktes auswirken. In einer bevorzugten Ausführungsform wird kein Regler eingesetzt.

Im Rahmen des beschriebenen Polymerisationsverfahrens werden auch Dispergiermittel (DM) verwendet, die sowohl die Monomertröpfchen als auch die gebildeten Polymerisat-Teilchen im wässrigen Medium dispers verteilt halten und so die Stabilität der erzeugten wässrigen Polymerisatdispersion gewährleisten. Als Dispergiermittel (DM) kommen sowohl die zur Durchführung von radikalischen wässrigen Emulsionspolymerisationen üblicherweise eingesetzten Schutzkolloide als auch handelsübliche Emulgatoren in Betracht. Geeignete Schutzkolloide sind beispielsweise Polyvinylalkohole, Polyalkylenglykole, Alkalimetallsalze von Polyacrylsäuren und Polymethacrylsäuren und Gelatinederivate. Geeignete Schutzkolloide sind z.B. Acrylsäure, Methacrylsäure, Maleinsäureanhydrid, 2-Acrylamido-2-methylpropansulfonsäure und/oder 4-Styrolsulfon-säre enthalfende Copolymerisate und deren Alkalimetallsalze.

Geeignete Schutzkolloide sind ferner auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, aminogruppentragende Acrylate, Methacrylate, Acrylamide und/oder Methacrylamide enthaltende Homo- und Copolymerisate. Eine ausführliche Beschreibung weiterer geeigneter Schutzkolloide findet sich auch in Houben-Weyl, "Methoden der organischen Chemie", Band XIV/1, Makromolekulare Stoffe, Georg-Thieme-Verlag, Stuttgart, 1961, Seiten 411 bis 420.

Es können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Im Falle der Verwendung von Gemischen grenzflächenaktiver Substanzen sollten die Einzelkomponenten miteinander verträglich sein. Im Allgemeinen sind anionische Emulgatoren untereinander und mit nicht-ionischen Emulgatoren verträglich.

Das gleiche gilt auch für kationische Emulgatoren, während anionische und kationische Emulgatoren meistens nicht miteinander kombiniert werden sollten. Eine Übersicht geeigneter Emulgatoren findet sich in Houben-Weyl, "Methoden der organischen Chemie", Band XIV/1, Makromolekulare Stoffe, Georg-Thieme-Verlag, Stuttgart, 1961, Seiten 192 bis 208. Erfindungsgemäß werden als Dispergiermittel insbesondere Emulgatoren eingesetzt wie anionische, kationische oder nicht-ionische Tenside. Gebräuchliche nicht-ionische Emulgatoren sind beispielsweise oxylierte Mono-, Di- und Trialkyl-phenole sowie ethoxylierte Fettalkohole. Übliche anionische Emulgatoren sind zum Beispiel Alkalimetall- und Ammoniumsalze von Alkylsulfaten (mit Alkylresten von C₈-C₁₂), von Schwefelsäure-halbestem ethoxylierter Alkanole (Alkylrest: C₁₂-C₁₈) und ethoxylierter Alkylphenole (Alkylreste: C₄-C₁₂) und von Alkylsulfonsäuren (Alkylrest: C₁₂-C₁₈).

Geeignete kationische Emulgatoren sind unter anderem C₆-C₁₈-Alkyl-, Alkylaryl- oder heterocyclische Reste aufweisende, primäre, sekundäre, tertiäre oder quartäre Ammoniumsalze, Pyridiniumsalze, Imidazoliniumsalze, Oxozoliniumsalze, Morpholiniumsalze, Tropyliumsalze, Sulfoniumsalze und Phosphoniumsalze. Beispielhafte Verbindungen sind u.a. Dodecylammoniumacetat oder das entsprechende Sulfat, Disulfate oder Acetate der verschiedenen 2-(N,N,N-Trimethylammonium)ethylparaffinsäureester, N-Cetylpyridiniumsulfat und N-Laurylpyridiniumsulfat. Die Emulgatoren und Schutzkolloide können auch als Mischungen eingesetzt werden.

Die als Dispergiermittel bevorzugt eingesetzten Emulgatoren werden vorteilhaft in einer Gesamtmenge von 0,005 bis 5 Gew.-%, vorzugsweise von 0,01 bis 5 Gew.-%, insbesondere von 0,1 bis 3 Gew.-%, jeweils bezogen auf die Monomer-Gesamtkonzentration, eingesetzt. Die Gesamtmenge der als Dispergiermittel zusätzlich oder statt der Emulgatoren eingesetzten Schutzkolloide beträgt oft 0,1 bis 10 Gew.-% und häufig 0,2 bis 7 Gew.-%, jeweils bezogen auf die Monomeren-Gesamtkonzentration. Bevorzugt werden jedoch anionische und/oder nicht-ionische Emulgatoren und insbesondere bevorzugt anionische Emulgatoren als Dispergiermittel eingesetzt.

Als weitere Polymerisationshilfsstoffe können die üblichen Puffersubstanzen (PS), durch welche pH-Werte von vorzugsweise 6 bis 11 eingestellt werden, wie Natriumbicarbonat und Natriumpyrophosphat, sowie 0 bis 3 Gew.-% eines Molekulargewichtsreglers (MR), wie z. B. Mercaptane, Terpinole oder dimeres α-Methylstyrol, bei der Polymerisation verwendet werden. Die Puffersubstanzen können auch eine komplexierende Wirkung haben.

Die Reaktion der Polymerisation kann im Bereich von 0 bis 170°C durchgeführt werden. In der Regel werden Temperaturen zwischen 40 und 120°C, häufig zwischen 50 und 110°C und oft zwischen 60 und 100°C angewendet.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,03 bis 2 Gew.-% und oft von 0,04 bis 1,5 Gew.-% einer Polymersaat, jeweils bezogen auf die Monomer-Gesamtmenge, erfolgen. Eine Polymersaat kann insbesondere dann eingesetzt werden, wenn die Teilchengröße der mittels radikalisch wässriger Emulsionspolymerisation herzustellenden Polymerpartikel gezielt eingestellt werden soll, wie es in US 2,520,959 und US 3,397,165 beschrieben wird.

Die auf die vorstehend beschriebene Weise hergestellten Polymere (b1) eignen sich als Pfropfgrundlage für die Herstellung der Pfropfcopolymere (B).

Eine wichtige Kenngröße für Pfropfcopolymere ist die Pfropfausbeute, wobei bei einer vollständigen Pfropfung die Pfropfausbeute 100 % beträgt. Für eine Reihe von Anwendungen sind Pfropfcopolymere mit möglichst hoher Pfropfausbeute von Vorteil, da diese nur geringe Mengen an freiem Polymerisat der Monomeren enthalten. Das nicht an den Kautschuk gebundene Polymerisat kann die physikalischen Eigenschaften des Copolymers negativ beeinflussen, was sich insbesondere in Mischungen mit weiteren Komponenten bemerkbar macht.

Die Pfropfhülle (b2) wird, gegebenenfalls nach Durchführung einer Agglomeration, durch ein Emulsionspolymerisationsverfahren erzeugt. Die Pfropfhülle (b2) wird gemäß einer Ausführungsform der Erfindung in Gegenwart des nach den oben beschriebenen Verfahren erhaltenen Pfropfkerns (b1) aus einem Monomergemisch, enthaltend die Komponenten Styrol, Acrylnitril und gegebenenfalls weitere Monomere polymerisiert. Dabei können die Monomere (und gegebenenfalls weitere Monomere) einzeln oder in Mischungen miteinander zugefügt werden. Beispielsweise kann man zunächst Styrol allein und danach eine Mischung aus Styrol und Acrylnitril aufpfropfen. Es ist vorteilhaft, diese Pfropfcopolymerisation wieder in wässriger Emulsion unter den üblichen, vorstehend beschriebenen Bedingungen durchzuführen, wobei sich der Einsatz eines Redox-Initiatorsystems bewährt hat.

Die Pfropfcopolymerisation zur Erzeugung der Pfropfhülle (b2) kann im gleichen System erfolgen wie die Emulsionspolymerisation zur Herstellung der Pfropfgrundlage (b1), wobei, falls nötig, weitere Emulgatoren sowie Hilfsstoffe zugegeben werden können. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfauflagen - oder kontinuierlich während der Polymerisation zugegeben werden. Vorzugsweise können die Monomere (insbesondere Styrol und Acrylnitril) gleichzeitig zugegeben werden.

Der Pfropfungsgrad (PG) ist die Menge der eingesetzten Pfropfmonomere (beispielsweise Menge an Styrol plus Menge an Acrylnitril) geteilt durch die Summe aus der Menge der Pfropfgrundlage (z.B. Menge an α,β-ungesättigtem Monocarbonsäureester) und der Menge der eingesetzten Pfropfmonomere.

Die Pfropfcopolymerisation des Gemischs der in der Pfropfhülle vorhandenen Komponenten und gegebenenfalls weiterer Monomere in Gegenwart der Pfropfgrundlage (b1) wird so durchgeführt, dass ein Pfropfungsgrad von 10 bis 70 Gew.-%, vorzugsweise 20 bis 60 Gew.-%, insbesondere 30 bis 55 Gew.-% resultiert. Da die Pfropfausbeute (PA) in der Regel nicht 100% beträgt, ist der tatsächlich aufgepfropfte Teil der Polymere kleiner als die eingesetzte Menge. Daraus folgt, dass eine Menge an freien Polymeren entsteht. Die Steuerung der Pfropfausbeute bei der Pfropfpolymerisation kann unter anderem auch durch die Dosiergeschwindigkeit der Monomeren oder durch Initiator- und Reglerzugabe erfolgen. Beispielsweise führt eine größere Menge an eingesetztem Regler (z.B. Mercaptane) zu einer größeren Menge an freien Polymeren.

Zur Initiierung der Pfropf-Polymerisation können auch pfropfaktive und wasserlösliche Redox-Systeme eingesetzt werden. Beispielsweise kann man konventionelle wasserlösliche Starter wie z. B. Kaliumperoxodisulfat, Natriumperoxodisulfat, Ammoniumperoxodisulfat, Wasserstoffperoxid zusammen mit mindestens einem konventionellen Reduktionsmittel wie z. B. Natriumsulfit, Natriumdisulfit, Natriumhydrogensulfit, Natriumdithionit, Ascorbinsäure, Zucker oder das Natriumsalz der Hydroxymethansulfonsäure als Redox-System verwenden. Solche Redox-Systeme führen in vielen Fällen zu grobteiligeren Dispersionen. Besonders geeignete Redoxkatalysatoren mit hoher Pfropfaktivität sind wasserlösliche Startersysteme wie Redox-Systeme aus Wasserstoffperoxid und Schwermetallionen wie Cer-, Mangan- oder Eisen(II)salze, wie sie z.B. in Houben-Weyl, "Methoden der organischen Chemie", 4. Auflage, Band E 20, S. 2168, beschrieben werden. Besonders geeignet ist Kaliumperoxodisulfat.

Die Polymerisation kann so durchgeführt werden, dass das Schwermetallsalz des Redox-Systems wie z. B. das Eisen(II)salz dem Ansatz bereits vor der Polymerisation zugesetzt wird, während das Peroxid gleichzeitig mit den Monomeren, aber getrennt davon zudosiert wird. Das Eisen(II)salz wird beispielsweise in Konzentrationen von 1 bis 200 mg/l Fe-(II)-Ionen, bezogen auf die gesamte Dispersion, eingesetzt, wobei auch höhere und niedrigere Konzentrationen möglich sind.

Die Zuführung des Redox-Initiatorsystems kann auf verschiedene Weisen erfolgen, beispielsweise durch portionsweise Zugabe wie in WO 2001/30901 oder in WO 2002/28931 beschrieben. Vorzugsweise wird das Oxidationsmittel Cumolhydroperoxid verwendet (ggf. in Mischung mit Cumol), wobei dieses insbesondere zum Teil kontinuierlich zugeführt und zum Teil als Portion (z. B. einmalig) zugegeben wird.

Zusätzlich zu den Redox-Initiatoren können konventionelle Starter wie öllösliche oder nur wenig wasserlösliche organische Peroxide oder Azo-Initiatoren Verwendung finden. Vorteile bietet beispielsweise die Zugabe weiterer Reduktionsmittel, die bevorzugt mit dem Eisensalz vor der Polymerisation vorgelegt werden. Als Reduktionsmittel kommen z. B. Natriumsulfit, Natriumdisulfit, Natriumhydrogensulfit, Natriumdithionit, Ascorbinsäure, reduzierende Zucker sowie das Natriumsalz der Hydroxymethansulfonsäure in Frage.

Das Molgewicht des aufgepfropften Polymeren kann zusätzlich eingestellt werden durch die Mitverwendung von Kettenüberträgern oder Molekulargewichtsreglern (MR) wie z. B. n-Dodecylmercaptan, t-Dodecylmercaptan, n- Butylmercaptan oder t-Butylmercaptan. Geeignet sind auch geruchsfreie Regler wie Terpinolene, siehe auch EP-A 1 191 044.

Die Polymerisation wird häufig bei pH-Werten von 2,5 bis 12, vorzugsweise bei pH-Werten von 8 bis 11 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak oder Ammoniumcarbonat auf den gewünschten Wert eingestellt werden. Bevorzugt ist eine Einstellung des pH-Wertes der wässrigen Polymerdispersionen auf 7 bis 11 im Anschluss an die Polymerisation durch Zugabe von Natronlauge, Kalilauge oder Ammoniak.

Zwischen der Herstellung der Pfropfgrundlage (b1) und dem Aufbringen der Pfropfhülle (b2) kann ein Agglomerationsschritt durchgeführt werden, um die Teilchengrößen und Teilchengrößenverteilungen gezielt einzustellen. Verschiedene Verfahren zur teilweisen oder vollständigen Agglomeration der Pfropfgrundlage (b1) sind dem Fachmann bekannt, siehe z.B. EP-A 1 305 345, EP-A 029 613, EP-A 007 810, DE-A 12 33 131, DE-A 12 58 076 und DE-A 21 01 650. Die Agglomeration kann auch nach anderen dem Fachmann bekannten Methoden vorgenommen werden. Diese können einen erheblichen Einfluss auf die Qualität der Formmassen und auf die Kosten des Gesamtverfahrens haben.

Es können im Prinzip auch physikalische Agglomerationsverfahren wie Scher-Koagulation, Gefrier- oder Druckagglomerationsverfahren verwendet werden, es werden aber in der Regel chemische Methoden eingesetzt. Zu letzteren gehört auch die Zugabe von Elektrolyten, beispielsweise Magnesiumsulfat, oder von anorganischen oder organischen Säuren.

In der zweiten Stufe kann der Kautschuklatex agglomeriert werden. Dies geschieht in der Regel durch Zugabe einer Dispersion eines Acrylesterpolymerisates. Vorzugsweise werden Dispersionen von Copolymerisaten von (C₁-C₄-Alkyl)-estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylol-methacrylamid oder N-Vinylpyrrolidon, eingesetzt. Bevorzugt wird ein Copolymerisat aus 90 bis 96 Gew.-% Ethylacrylat und 4 bis 10 Gew.-% Methacrylamid verwendet. Die Agglomerierdispersion kann gegebenenfalls auch mehrere der genannten Acrylesterpolymerisate enthalten. Die Konzentration der Acrylesterpolymerisate in der zur Agglomeration verwendeten Dispersion soll im Allgemeinen zwischen 3 und 40 Gew.-% liegen.

Bei der Agglomeration werden in der Regel 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe kann variiert werden, im Allgemeinen dauert sie etwa 1 bis 60 Minuten bei einer Temperatur zwischen 20° und 90° C, vorzugsweise zwischen 30° und 75° C.

Außer mittels einer Acrylesterpolymerisat-Dispersion kann der Kautschuklatex prinzipiell auch durch andere Agglomeriermittel wie z.B. Essigsäureanhydrid agglomeriert werden. Auch eine Agglomeration durch Druck oder Einfrieren ist möglich, jedoch wenig vorteilhaft. Die genannten Methoden sind dem Fachmann seit längerem bekannt.

Unter den bislang beschriebenen Bedingungen wird jedoch häufig nur ein Teil der Kautschukteilchen agglomeriert, so dass eine bi- oder polymodale Verteilung entsteht.

Nach der Agglomeration liegen im Allgemeinen mehr als 40, vorzugsweise zwischen 51 und 70% der Teilchen (Zahlen-Verteilung) im agglomerierten Zustand vor. Der erhaltene Teil-agglomerierte Kautschuklatex ist verhältnismäßig stabil, so dass er ohne weiteres gelagert und transportiert werden kann, ohne dass Koagulation eintritt.

Für die Agglomeration von als Pfropfgrundlage dienenden Kautschukpartikeln eignet sich insbesondere eine copolymerisierbare, polyfunktionelle, agglomerierend wirkende Komponente, die mindestens ein Copolymerisat aus C₁- bis C₁₂-Alkylacrylaten oder C₁- bis C₁₂-Methalkylacrylaten und polaren Comonomeren aus der Gruppe Acrylamid, Methylacrylamid, Ethylacrylamid, n-Butylacrylamid oder Maleinsäureamid enthält.

Als Agglomerationspolymerisate sind beispielsweise Polyethylenoxidpolymere, Polyvinylether oder Polyvinylalkohol bekannt. Auch geeignete als Agglomerisationspolymerisate sind Copolymere, die andere als die oben aufgeführten polaren Comonomere aufweisen. Zu den besonders geeigneten Agglomerationspolymerisaten zählen insbesondere die Copolymerisate aus C₁- bis C₁₂-Alkylacrylaten oder C₁- bis C₁₂-Methalkylacrylaten und polaren Comonomeren wie Acrylamid, Methacrylamid, Ethacrylamid, n-Butylacrylamid oder Maleinsäureamid, siehe auch EP-A 1 305 345.

In einer bevorzugten Ausführungsform der vorliegenden Erfindung wird kein Agglomerierungsschritt durchgeführt.

Erfindungswesentlich ist, dass der Gehalt des α,β-ungesättigten Monocarbonsäurenitrils in Komponente (B), in Gew.-% bezogen auf das Gesamtgewicht der Pfropfschale b2, 5 bis 10 %-Punkte unter dem Gehalt an α,β-ungesättigtem Monocarbonsäurenitril der Komponente (A), in Gew.-% bezogen auf das Gesamtgewicht der Komponente (A), liegt.

### Komponente (C):

Komponente (C) in der erfindungsgemäßen Formmasse ist ein Pfropfkautschuk mit einer mittleren Teilchengröße von 410 bis 1000 nm, bevorzugt 410 bis 800 nm, besonders bevorzugt 410 bis 600 nm, enthaltend eine Pfropfgrundlage c1 aufgebaut aus wenigstens einem α,β-ungesättigten Monocarbonsäureester und mindestens eine Pfropfschale c2 aufgebaut aus wenigstens einem aromatischen Vinylmonomer und wenigstens einem α,β-ungesättigten Monocarbonsäurenitril.

Als Komponente (C) umfasst die erfindungsgemäße Formmasse 10 bis 20 Gew.-%, jeweils bezogen auf das Gesamtgewicht der Komponenten (A) bis (D), eines Pfropfkautschuks, welcher eine Pfropfgrundlage c1 und mindestens eine Pfropfschale c2 aufweist.

Der α,β-ungesättigte Monocarbonsäureester ist abgeleitet von einer α,β-ungesättigten Monocarbonsäure, ausgewählt aus der Gruppe bestehend aus Methacrylsäure, Acrylsäure und Mischungen davon. Um den α,β-ungesättigten Monocarbonsäureester zu erhalten, wird die genannte α,β-ungesättigte Monocarbonsäure mit einem Alkohol umgesetzt. Dieser Alkohol ist ein gesättigter oder ungesättigter aliphatischer Alkohol mit 1 bis 12 Kohlenstoffatomen. In einer bevorzugten Ausführungsform weist dieser Alkohol 1 bis 8, besonders bevorzugt 2 bis 6 Kohlenstoffatome auf. Die Alkoholkomponente des α,β-ungesättigten Monocarbonsäureesters kann dabei linear oder verzweigt aufgebaut sein. In einer bevorzugten Ausführungsform ist der Alkoholrest des Esters linear aufgebaut. Als C₁-C₁₂-Alkylester der Acrylsäure eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

In einer besonders bevorzugten Ausführungsform ist der α,β-ungesättigte Monocarbonsäureester Acrylsäurebutylester. Daher ist einer bevorzugten Ausführungsform die Pfropfgrundlage c1 ein Polyacrylsäurebutylester. In einer weiteren bevorzugten Ausführungsform ist das als Pfropfgrundlage b1 eingesetzte Polyacrylsäurebutylester quervernetzt. Diese Quervernetzung kann durch alle dem Fachmann bekannte Verfahren durchgeführt werden, beispielsweise durch Zusatz von vernetzenden Monomeren. Solche Monomere sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohol, (siehe DE-OS 12 60 135), der unter dem Namen Dihydrodicyclopentadienylacrylat (DCPA) bekannt ist, sowie die Allylester der Acrylsäure und der Methacrylsäure.

Die in Komponente (C) eingesetzte Pfropfgrundlage c1 weist in einer bevorzugten Ausführungsform einen Quellungsindex von 5 bis 25, besonders bevorzugt 7 bis 18, ganz besonders bevorzugt 8 bis 12 auf. Der Quellungsindex ist ein Maß für die Quellbarkeit eines Polymers durch ein Lösungsmittel. Übliche Quellungsmittel sind beispielsweise Methyl-ethylketon oder Toluol. Die Bestimmung des Quellungsindex geschieht beispielsweise nach einem Verfahren, bei dem ca. 0,2 g des Feststoffes einer durch Verdampfen des Wassers verfilmten Pfropfgrundlagen-Dispersion in einer Menge von z.B. 50 g Toluol gequollen werden. Nach z.B. 24 Stunden wird das Toluol abgesaugt und die Probe ausgewogen. Nach dem trocknen der Probe im Vakuum wird diese erneut ausgewogen. Der Quellungsindex ist das Verhältnis der Auswaage nach dem Quellungsvorgang zu der Auswaage trocken nach der erneuten Trocknung.

Die in Komponente (C) eingesetzte Pfropfgrundlage c1 weist in einer weiteren bevorzugten Ausführungsform einen Gelgehalt von mehr als 80%, besonders bevorzugt mehr als 90%, besonders bevorzugt mehr als 94% auf. Der Gelgehalt ist derjenige Produktgehalt, der vernetzt und damit in einem bestimmten Lösungsmittel nichtlöslich ist. Der Gelgehalt wird vorzugsweise im gleichen Lösungsmittel wie der Quellungsindex bestimmt. Der Gelgehalt errechnet sich aus dem Verhältnis der Trockenauswaage nach dem Quellschritt zur Einwaage vor dem Quellschritt (x 100%).

Die in Komponente (C) vorliegende Pfropfgrundlage c1 hat im Allgemeinen eine mittlere Teilchengröße von 300 bis 600 nm, bevorzugt 350 bis 580 nm, besonders bevorzugt 370 bis 560 nm.

In dem als Komponente (C) eingesetzten Pfropfkautschuk liegt des weiteren mindestens eine Pfropfschale c2 aufgebaut aus wenigstens einem aromatischen Vinylmonomer und wenigstens einem α,β-ungesättigten Monocarbonsäurenitril vor. Das wenigstens eine aromatische Vinylmonomer in der Pfropfschale c2 entspricht in einer bevorzugten Ausführungsform ebenfalls Verbindungen der allgemeinen Formel (I) mit den dort angegebenen Bedeutungen für R¹ und R². In einer besonders bevorzugten Ausführungsform ist das wenigstens eine aromatische Vinylmonomer in der Pfropfschale c2 ausgewählt aus Styrol, α-Methylstyrol und Mischungen davon.

Das in der Pfropfschale c2 enthaltene α,β-ungesättigte Monocarbonsäurenitril ist in einer bevorzugten Ausführungsform ausgewählt aus Acrylnitril oder Methacrylnitril oder Mischungen davon. Bevorzugt wird Acrylnitril verwendet.

In Komponente (C) liegt die Pfropfgrundlage c1 in einer Menge von 40 bis 80, bevorzugt 50 bis 70, besonders bevorzugt 60 Gew.-%, bezogen auf Komponente (C), vor. Die Pfropfschale c2 liegt in einer bevorzugten Ausführungsform in einer Menge von 20 bis 60, bevorzugt 30 bis 50, besonders bevorzugt 40 Gew.-%, jeweils bezogen auf Komponente (C) vor. Die Mengen von Pfropfgrundlage c1 und Pfropfschale c2 addieren sich jeweils zu 100 Gew.-%.

Das Verhältnis von aromatischem Vinylpolymer zu α,β-ungesättigtem Monocarbonsäurenitril beträgt in der Pfropfschale c2 bevorzugt 8:1 bis 2:1, besonders bevorzugt 6:1 bis 4:1, ganz besonders bevorzugt 5,5:1 bis 4,5:1.

Somit wird in einer ganz besonders bevorzugten Ausführungsform als Komponente (C) ein Pfropfkautschuk eingesetzt, welcher als Pfropfgrundlage c1 einen quervernetzten Polyacrylsäurebutylester und als Pfropfschale c2, ein Copolymer aus Styrol und Acrylnitril aufweist. Die Pfropfschale c2 kann dabei teilweise oder auch vollständig auf die Pfropfgrundlage c1 aufgepfropft sein.

Verfahren zur Herstellung eines in der erfindungsgemäßen Formmasse als Komponente (C) vorliegenden Pfropfkautschuks sind dem Fachmann bekannt und sind bereits bezüglich der Komponente (B) der erfindungsgemäßen Formmasse beschrieben.

In einer weiteren bevorzugten Ausführungsform wird Komponente (C) erhalten, indem die Pfropfgrundlage c1 vorgelegt wird, und die in der Pfropfschale enthaltenen Monomere zugegeben und polymerisiert werden. In einer besonders bevorzugten Ausführungsform wird dabei mehr als 30%, bevorzugt aber nicht mehr als 50% des aromatischen Vinylpolymers, bezogen auf die Gesamtmenge an aromatischem Vinylpolymer, zugegeben, bevor mit der Zugabe des α,β-ungesättigten Monocarbonsäurenitrils begonnen wird.

In einer bevorzugten Ausführungsform der erfindungsgemäßen Formmasse ist in Komponenten (B) und (C) der α,β-ungesättigten Monocarbonsäureester ein Acrylsäure- oder Methacrylsäurealkylester abgeleitet von einem Alkohol mit 1 bis 8 Kohlenstoffatomen.

In einer weiteren bevorzugten Ausführungsform der erfindungsgemäßen Formmasse ist in Komponenten (B) und (C) das aromatische Vinylmonomer Styrol.

In einer weiteren Ausführungsform der erfindungsgemäßen Formmasse ist in Komponenten (B) und (C) das α,β-ungesättigte Monocarbonsäurenitril Acrylnitril.

Die Komponenten (A), (B) und (C) können nach allen dem Fachmann bekannten Verfahren vermischt werden, beispielsweise mittels Extrusion oder Kompoundierung.

Der Pfropfkautschuk (C) kann vor dem Vermischen koaguliert werden, indem wie bereits zu Komponente (B) beschreiben vorgegangen wird.

Die koagulierten Pfropfkautschuke (B) und (C) werden gegebenenfalls einem Zentrifugierschritt unterworfen, so dass der Wassergehalt auf 60 bis 95 Gew.-% gesenkt wird.

In einer weiteren Ausführungsform werden die nassen Pfropfkautschuke (B) und (C) getrocknet, bevor sie dem Extruder zugeführt werden. Geeignete Methoden zum Trocknen entsprechender Pfropfkautschuke sind dem Fachmann bekannt. Es ist jedoch auch möglich, dass die nassen Pfropfkautschuke (B) und (C) direkt dem Extruder zugeführt werden, um sie mit der Hartkomponente (A) zu vermischen. In diesem Fall wird das Wasser während des Extrusionsschrittes entfernt.

Erfindungswesentlich ist, dass in den erfindungsgemäßen Formmassen das Gewichtsverhältnis der Komponente (B) zur Komponente (C) im Bereich von 3:1 bis 1:1 liegt

In einer bevorzugten Ausführungsform der erfindungsgemäßen Formmasse liegt die Teilchengröße der Pfropfkautschuke, gemittelt über alle Pfropfkautschuke (B) und (C), im Bereich von 280 bis 320 nm, bevorzugt im Bereich von von 285 bis 315 nm, besonders bevorzugt im Bereich von 290 bis 310 nm.

Erfindungswesentlich ist, dass der Gehalt des α,β-ungesättigten Monocarbonsäurenitrils in Komponente (C), in Gew.-% bezogen auf das Gesamtgewicht der Pfropfschale c2, 5 bis 10 %-Punkte unter dem Gehalt an α,β-ungesättigtem Monocarbonsäurenitril der Komponente (A), in Gew.-% bezogen auf das Gesamtgewicht der Komponente (A), liegt.

### Komponente (D):

Die erfindungsgemäße Formmasse weist als Komponente (D) 0 bis 10 Gew.-%, bevorzugt 0 bis 8 Gew.-%, besonders bevorzugt 0 bis 5 Gew.-%, jeweils bezogen auf das Gesamtgewicht der Komponenten (A) bis (D), Additive auf.

Als Additive (D) kommen alle solche dem Fachmann an sich bekannten Substanzen in Betracht, die üblicherweise zur Verarbeitung oder Ausrüstung der Polymere zum Einsatz kommen.

Genannt seien beispielsweise Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und insbesondere Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Hinsichtlich weiterer üblicher Hilfs- und Zusatzstoffe wird z.B. auf "Plastics Additives Handbook", Ed. Gächter and Müller, 4th edition, Hanser Publ., Munich, 1996, verwiesen.

Geeignete Pigmente sind beispielsweise Titandioxid, Phthalocyanine, Ultramarinblau, Eisenoxide oder Ruß, sowie die gesamte Klasse der organischen Pigmente.

Geeignete Färbemittel sind z.B. alle, die zur transparenten, halbtransparenten oder nichttransparenten Einfärbung von Polymeren verwendet werden können, insbesondere solche, die zur Einfärbung von Styrolcopolymeren geeignet sind, ausgewählt aus Farbstoffen, Pigmenten und Spezialeffekt-Pigmenten.

Als geeignete Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien sind z. B. sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinon-analoge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, z.B. Irganox^{®}. Zusammen mit den zuvor beispielhaft genannten phenolischen Antioxidantien können so genannte Co-Stabilisatoren mitverwendet werden, insbesondere Phosphor- oder Schwefelhaltige Co-Stabilisatoren. Solche P- oder S-haltigen Co-Stabilisatoren sind dem Fachmann bekannt. Bevorzugte Wärmestabilisatoren (Antioxidantien) sind substituierte Thiophenole, beispielsweise 4,4'-Thio-bis-(6-t-butyl-3-methyl-phenol).

Geeignete Stabilisatoren gegen Lichteinwirkung sind z.B. verschiedene substituierte Resorcine, Salicylate, Benzotriazole und Benzophenone. Als Mattierungsmittel kommen sowohl anorganische Stoffe wie Talkum, Glaskugeln oder Metallcarbonate (wie z. B. MgCO₃, CaCO₃) in Betracht, als auch Polymerpartikel - insbesondere sphärische Partikel mit Durchmessern d₅₀ (Gewichtsmittel) über 1 mm - auf Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Anti-Tropfmittel sind beispielsweise Polytetrafluorethylen (Teflon)-Polymere und ultrahochmolekulares Polystyrol (Molmasse M_{w} über 2 000 000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen.

Als teilchenförmige Füllstoffe eignen sich z. B. Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxidglycol und Propylenoxid (insbesondere Zweiblock- oder Dreiblockcopolymere aus Ethylenoxid- und Propylenoxid-Blöcken)glycol, und Glycerinmono- und -distearate, sowie deren Mischungen.

Geeignete Stabilisatoren sind beispielsweise gehinderte Phenole, aber auch Vitamin E bzw. analog dazu aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole sind geeignet. Andere geeignete Verbindungen sind zum Beispiel Thiocarbonsäureester. Einsetzbar sind auch C₆-C₂₀-Fettsäureester der Thiopropionsäure, besonders die Stearylester und Laurylester. Man kann auch Thiodipropionsäuredilaurylester (Dilaurylthiodipropionat), Thiodipropionsäuredisterarylester (Distearylthiodipropionat) oder deren Mischungen verwenden. Weitere Additive sind beispielsweise HALS-Absorber, wie Bis(2,2,6,6-tetramethyl-4-piperidyl)sebazat oder UV-Absorber wie 2H-Benzotriazol-2-yl-(4-methyphenol). Derartige Additive werden üblicherweise in Mengen von 0,01 bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid), Polyolefinwachse bzw. allgemein höhere Fettsäuren, deren Derivate und entsprechende Fettsäuregemische mit 12 bis 30 Kohlenstoffatomen. Auch Ethylen-bis-stearamid (z. B. Irgawax, Hersteller Ciba, Schweiz) ist besonders geeignet. Die Mengen dieser Zusätze liegen im Bereich von 0,05 bis 5 Gew.-%.

Auch Silikonöle, oligomeres Isobutylen oder ähnliche Stoffe kommen als Additive in Betracht. Die üblichen Mengen, falls verwendet, betragen von 0,001 bis 3 Gew.-%. Auch Pigmente, Farbstoffe, Farbaufheller, wie Ultramarinblau, Phthalocyanine, Titandioxid, Cadmiumsulfide, Derivate der Perylentetracarbonsäure sind verwendbar. Verarbeitungshilfsmittel und Stabilisatoren wie UV-Stabilisatoren, Wärmestabilisatoren (z. B. butylierte Reaktionsprodukte von p-Cresol und Dicyclopentadien; Wingstay L; Hersteller: Goodyear; oder aber Thiodipropionsäuredilaurylester, Irganox, Hersteller: Ciba), Schmiermittel und Antistatika (z. B. Ethylenoxid-Propylenoxid-Copolymere wie Pluronic (Hersteller: BASF)) werden, falls eingesetzt, üblicherweise in Mengen von 0,01 bis 5 Gew.-% verwendet, bezogen auf die gesamte Formmasse.

Das Mischen der Komponenten (A, (B), (C) und gegebenenfalls (D) kann nach jeder beliebigen Weise nach allen bekannten Methoden erfolgen. Vorzugsweise erfolgt jedoch das Abmischen der Komponenten durch gemeinsames Schmelzevermischen, wie Compounding, Extrudieren, Kneten oder Verwalzen der Komponenten, z.B. bei Temperaturen im Bereich von 180 bis 400 °C, wobei die Komponenten, sofern erforderlich, zuvor aus der bei der Polymerisation erhaltenen Lösung oder wässrigen Dispersion isoliert werden. Die in wässriger Dispersion erhaltenen Produkte der Pfropfcopolymerisation können z.B. mit Magnesiumsulfat ausgefällt werden. Sie können vorzugsweise nur teilweise entwässert werden und als feuchte Krümel (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymerisate erfolgt. Die Trocknung der Partikel kann auch gemäß DE-A 19907136 erfolgen.

Die erfindungsgemäßen Formmassen können zu Folien, Formkörpern oder Fasern, insbesondere eingefärbten, verarbeitet werden, insbesondere zu Kabelummantelungen, Folien, Schläuchen, Fasern, Profilen, Schuhschalen, Schuhsohlen, technischen Formteilen, Gebrauchsartikeln, Formkörpern aller Art, Beschichtungen, Faltenbalgen, Tierohrmarken und/oder Blasformkörpern.

Diese Folien, Formkörpern oder Fasern können nach den bekannten Verfahren der Thermoplastverarbeitung aus den erfindungsgemäßen Formmassen hergestellt werden. Insbesondere kann die Herstellung durch Thermoformen, Extrudieren, Spritzgießen, Kalandrieren, Hohlkörperblasen, Pressen, Preßsintern, Tiefziehen oder Sintern, vorzugsweise durch Spritzgießen, erfolgen.

Die erfindungsgemäßen Formmassen weisen gegenüber bekannten Formmassen, vor allem bei tiefen Temperaturen, beispielsweise unter 0°C, bevorzugt unabhängig von der Verarbeitungstemperatur, bessere Schlagzähigkeit, Spannungsrißkorrosion und insbesondere bessere multiaxiale Zähigkeiten auf und zeigen bei Einfärbung, speziell mit gedeckten Farben, bevorzugt dunkle Farbtönen, eine verringerte Lichtstreuung, insbesondere keinerlei Regenbogeneffekt.

Die Erfindung wird anhand der nachfolgenden Beispiele näher erläutert.

### Beispiele:

### Meßmethoden:

Nachfolgend werden die zur Charakterisierung der Formmassen eingesetzten Untersuchungsmethoden wiedergegeben:

### Charpy-Kerbschlagzähigkeit (aₖ) [kJ/m²]:

Die Charpy-Kerbschlagzähigkeit (ak) wurde an bei 250°C Massetemperatur hergestellten Probekörpern nach ISO 179 1eA bei 23°C ermittelt.

### Lichtstreuung in Form des Regenbogeneffekts

Die Bestimmung des Regenbogeneffekts erfolgte durch Beurteilung einer Rundscheibe von 60 mm Durchmesser und 2 mm Dicke, hergestellt bei 250 °C. Die Scheibe wurde bei Tageslicht im Winkel von 45 °C von 3 Personen unabhängig voneinander betrachtet und gemäß folgendem Schema bewertet:
0 = keinerlei regelmäßiges Muster zu erkennen
1 = erstes leichtes regelmäßiges Streifenmuster erkennbar
2 = wie 1, etwas deutlicher ausgeprägt
3 = deutlich sichtbares Regenbogenmuster erkennbar.

### Einsatzstoffe

Komponenten, Formmassen oder Beispiele mit vorangestelltem "V-" sind nicht erfindungsgemäß und dienen zum Vergleich.

Als Komponenten A wurden eingesetzt:
A-i: Ein SAN hergestellt nach dem Lösungsmittelpolymerisationsverfahren aus 67 Gew.-% Styrol und 33 Gew.-% Acrylnitril mit einer Viskositätszahl VZ (gemessen in 0,5 %iger Toluol-Lösung bei Raumtemperatur) von 80 ml/g.

Als Komponenten B wurden eingesetzt:
B-i: Acrylatester-Pfropfkautschuk, hergestellt gemäß EP 450485 B1, Seite 7, Zeile 14, mit einer mittleren Teilchengröße von 100 nm.
B-ii: Acrylatester-Pfropfkautschuk, hergestellt gemäß DE 3149358 A1, Seite 15, Zeile 12, mit einer mittleren Teilchengröße von 220 nm.
B-iii: Acrylatester-Pfropfkautschuk, hergestellt gemäß EP 450485 B1, Seite 7, Zeile 14, mit einer mittleren Teilchengröße von 100 nm, jedoch mit einem S/AN Verhältnis in der Pfropfhülle von 80/20
B-iv: Acrylatester-Pfropfkautschuk, hergestellt gemäß EP 450485 B1, Seite 7, Zeile 14, mit einer mittleren Teilchengröße von 100 nm, jedoch mit einem S/AN Verhältnis in der Pfropfhülle von 70/30
C-i: Acrylatester-Pfropfkautschuk, hergestellt gemäß EP 450485 B1, Seite 7, Zeile 28 mit einer mittleren Teilchengröße von 410 nm.
D-i: Carbon Black, kommerziell vertrieben als Black Pearls 880 der Fa. Cabot.

### Herstellung der Formmassen und Formkörper:

Die Komponenten (A) - (D) (jeweilige Gew.-teile s. Tabelle 1 und 2) wurden in einem Zweischneckenextruder ZSK30 von Fa.Werner & Pfleiderer bei 250°C homogenisiert, extrudiert und granuliert. Aus den Granulaten wurden Prüfkörper hergestellt und die in Tabellen 1 und 2 genannten Eigenschaften bestimmt.

| Tabelle: Zusammensetzung und Eigenschaften der Formmassen (V: zum Vergleich) | | | | | | | | | |
|---|---|---|---|---|---|---|---|---|---|
| Beispiel | V-1 | V-2 | V-3 | V-4 | 5 | 6 | 7 | V-8 | V-9 |
| A-i [Gew.-%] | 59,5 | 59,5 | 59,5 | 59,5 | 59,5 | 59,5 | 59,5 | 59,5 | 59,5 |
| B-i [Gew.-%] | | 40 | | 35 | 30 | 25 | 20 | 15 | 10 |
| B-ii [Gew.-%] | | | 40 | | | | | | |
| B-iii [Gew.-%] | | | | | | | | | |
| B-iv [Gew.-%] | | | | | | | | | |
| C-i [Gew.-%] | 40 | | | 5 | 10 | 15 | 20 | 25 | 30 |
| D-i.. [Gew.-%] | 0,5 | 0,5 | 0,5 | 0,5 | 0,5 | 0,5 | 0,5 | 0,5 | 0,5 |
| Eigenschaften ak (kJ/m²) | 21 | 6 | 24 | 44 | 56 | 59 | 62 | 60 | 57 |
| Regenbogeneffekt | 3 | 0 | 0 | 0 | 0 | 0 | 0 | 1 | 1 |
| MVR (220/10) in Ml/10 min | 4,1 | 2,2 | 4,1 | 2,3 | 2,9 | 2,2 | 2,9 | 3,3 | 3,2 |

| | | | | | | | | | |
|---|---|---|---|---|---|---|---|---|---|
| *je geringer, desto besser der optische Eindruck. Skala: 3:stark, 2: mittel, 1:schwach, 0: sehr schwach **nicht bestimmbar, da Fließfähigkeit zu gering | | | | | | | | | |

A-i S/AN 67/33 mit VZ 80
B-i Acrylatester-Pfropfkautschuk nach EP 450485 B1, S. 7, Z.14 mit 100 nm
B-ii Acrylatester-Pfropfkautschuk nach DE 3149358 A1, S.15, Z. 121, S.7, Z. 14 mit 220 nm
B-iii Acrylatester-Pfropfkautschuk nach EP 450485 B1, S. 7, Z. 14 mit 100 nm, S/AN 80/20
B-iv Acrylatester-Pfropfkautschuk nach EP 450485 B1, S. 7, Z. 14 mit 100 nm, S/AN 70/30
C-i Acrylatester-Pfropfkautschuk nach EP 450485 B1, S. 7, Z. 28 mit 410 nm
D-i Carbon Black Batch Black Pearls 880, Cabot

| Tabelle: Zusammensetzung und Eigenschaften der Formmassen (V: zum Vergleich) | | | | | | | | | | |
|---|---|---|---|---|---|---|---|---|---|---|
| Beispiel | 10 | 11 | 12 | V-13 | V-14 | V-15 | V-16 | V-17 | V-18 | V-19 |
| A-i [Gew.-%] | 59,5 | 59,5 | 59,5 | 59,5 | 59,5 | 59,5 | 59,5 | 59,5 | 59,5 | 59,5 |
| B-i [Gew.-%] | | | | | | | | | | |
| B-ii [Gew.-%] | 30 | 25 | 20 | 15 | | | | | | |
| B-iii [Gew.-%] | | | | | 30 | 25 | 20 | | | |
| B-iv [Gew.-%] | | | | | | | | 30 | 25 | 20 |
| C-i [Gew.-%] | 10 | 15 | 20 | 25 | 10 | 15 | 20 | 10 | 15 | 20 |
| D-i.. [Gew.-%] | 0,5 | 0,5 | 0,5 | 0,5 | 0,5 | 0,5 | 0,5 | 0,5 | 0,5 | 0,5 |
| Eigenschaften ak (kJ/m²) | 38 | 31 | 29 | 31 | 23 | 21 | 21 | 22 | 42 | 50 |
| Regenbogeneffekt | 0 | 0 | 0-1 | 0-1 | 0 | 0-1 | 0-1 | 0 | 0-1 | 0-1 |
| MVR (220/10) in MI/10 min | 4,2 | 4 | 4,3 | 3,9 | 4,1 | 4,8 | 5 | nb** | nb** | 2,1 |

| | | | | | | | | | | |
|---|---|---|---|---|---|---|---|---|---|---|
| *je geringer, desto besser der optische Eindruck. Skala: 3:stark, 2: mittel, 1:schwach, 0: sehr schwach **nicht bestimmbar, da Fließfähigkeit zu gering | | | | | | | | | | |

A-i S/AN 67/33 mit VZ 80
B-i Acrylatester-Pfropfkautschuk nach EP 450485 B1, S. 7, Z.14 mit 100 nm
B-ii Acrylatester-Pfropfkautschuk nach DE 3149358 A1, S.15, Z. 121, S.7, Z. 14 mit 220 nm
B-iii Acrylatester-Pfropfkautschuk nach EP 450485 B1, S. 7, Z. 14 mit 100 nm, S/AN 80/20
B-iv Acrylatester-Pfropfkautschuk nach EP 450485 B1, S. 7, Z. 14 mit 100 nm, S/AN 70/30
C-i Acrylatester-Pfropfkautschuk nach EP 450485 B1, S. 7, Z. 28 mit 410 nm
D-i Carbon Black Batch Black Pearls 880, Cabot

Die Beispiele belegen, dass die erfindungsgemäßen Formmassen gegenüber bekannten Formmassen bessere Schlagzähigkeit aufweisen und bei Einfärbung, speziell mit gedeckten Farben, bevorzugt dunklen Farbtönen, eine verringerte Lichtstreuung, insbesondere keinerlei Regenbogeneffekt, zeigen.

## Patentansprüche

1. Formmasse, umfassend
(A) 50 bis 70 Gew.-% eines Copolymers enthaltend als Grundbausteine wenigstens ein α,β-ungesättigtes Monocarbonsäurenitril in Mengen von mindestens 30 Gew.-%, bezogen auf das Gesamtgewicht der Komponente (A), und wenigstens ein aromatisches Vinylmonomer als Komponente (A),
(B) 20 bis 30 Gew.-% eines Pfropfkautschuks mit einer mittleren Teilchengröße von 100 bis 280 nm, enthaltend eine Pfropfgrundlage b1, aufgebaut aus wenigstens einem α,β-ungesättigten Monocarbonsäureester, und mindestens eine Pfropfschale b2, aufgebaut aus wenigstens einem aromatischen Vinylmonomer und wenigstens einem α,β-ungesättigten Monocarbonsäurenitril als Komponente (B),
(C) 10 bis 20 Gew.-% eines Pfropfkautschuks mit einer mittleren Teilchengröße von 410 bis 1000 nm, enthaltend eine Pfropfgrundlage c1, aufgebaut aus wenigstens einem α,β-ungesättigten Monocarbonsäureester, und mindestes eine Pfropfschale c2 aufgebaut aus wenigstens einem aromatischen Vinylpolymer und wenigstens einem α,β-ungesättigten Monocarbonsäurenitril als Komponente (C) und
(D) 0 bis 10 Gew.-% Additive als Komponente (D),
wobei die Summe der Mengen der Komponenten (A), (B), (C) und (D) 100 Gew.-% beträgt,
**dadurch gekennzeichnet,**
**dass** das Gewichtsverhältnis der Komponente (B) zur Komponente (C) im Bereich von 3:1 bis 1:1 liegt, und
**dass** der Gehalt des α,β-ungesättigten Monocarbonsäurenitrils in Komponente (B), in Gew.-% bezogen auf das Gesamtgewicht der Pfropfschale b2, und in Komponente (C), in Gew.-% bezogen auf das Gesamtgewicht der Pfropfschale c2, jeweils 5 bis 10 %-Punkte unter dem Gehalt an α,β-ungesättigtem Monocarbonsäurenitril der Komponente (A), in Gew.-% bezogen auf das Gesamtgewicht der Komponente (A), liegt.

2. Formmasse nach Anspruch 1, **dadurch gekennzeichnet, dass** die Teilchengröße der Pfropfkautschuke, gemittelt über alle Pfropfkautschuke (B) und (C), im Bereich von 280 bis 320 nm liegt.

3. Formmasse nach Anspruch 1 oder 2, **dadurch gekennzeichnet, dass** Komponente (A) als α,β-ungesättigtes Monocarbonsäurenitril Acrylnitril und als aromatisches Vinylmonomer Styrol und/oder α-Methylstyrol enthält.

4. Formmasse nach einem der Ansprüche 1 bis 3, **dadurch gekennzeichnet, dass** in Komponenten (B) und (C) der α,β-ungesäftigten Monocarbonsäureester ein Acrylsäure- oder Methacrylsäurealkylester abgeleitet von einem Alkohol mit 1 bis 8 Kohlenstoffatomen ist.

5. Formmasse nach einem der Ansprüche 1 bis 4, **dadurch gekennzeichnet, dass** in Komponenten (B) und (C) das aromatische Vinylmonomer Styrol ist.

6. Formmasse nach einem der Ansprüche 1 bis 5, **dadurch gekennzeichnet, dass** in Komponenten (B) und (C) das α,β-ungesättigte Monocarbonsäurenitril Acrylnitril ist.

7. Verfahren zur Herstellung von Formmassen gemäß einem der Ansprüche 1 bis 6, **dadurch gekennzeichnet, dass** die Komponenten (A), (B), (C) und falls vorhanden (D) schmelzevermischt werden.

8. Verwendung von Formmassen gemäß einem der Ansprüche 1 bis 6 zur Herstellung von Folien, Formkörpern oder Fasern.

9. Folien, Formkörper oder Fasern, umfassend Formmassen gemäß einem der Ansprüche 1 bis 6.

## Claims

1. A molding composition comprising
(A) from 50 to 70% by weight of a copolymer comprising, as main units, at least one α,β-unsaturated monocarbonitrile in amounts of at least 30% by weight, based on the total weight of component (A), and at least one aromatic vinyl monomer, as component (A),
(B) from 20 to 30% by weight of a graft rubber with an average particle size of from 100 to 280 nm, comprising a graft base b1, composed of at least one α,β-unsaturated monocarboxylic ester, and at least one graft shell b2, composed of at least one aromatic vinyl monomer and of at least one α,β-unsaturated monocarbonitrile, as component (B),
(C) from 10 to 20% by weight of a graft rubber with an average particle size of from 410 to 1000 nm, comprising a graft base c1, composed of at least one α,β-unsaturated monocarboxylic ester, and at least one graft shell c2, composed of at least one aromatic vinyl polymer and of at least one α,β-unsaturated monocarbonitrile, as component (C), and
(D) from 0 to 10% by weight of additives, as component (D),
where the entirety of the amounts of components (A), (B), (C), and (D) is 100% by weight,
wherein
the ratio by weight of component (B) to component (C) is in the range from 3:1 to 1:1, and
the content of the α,β-unsaturated monocarbonitrile in component (B), in % by weight based on the total weight of the graft shell b2, and in component (C), in % by weight based on the total weight of the graft shell c2, is in each case from 5 to 10 percentage points below the content of α,β-unsaturated monocarbonitrile in component (A), in % by weight based on the total weight of component (A).

2. The molding composition according to claim 1, wherein the particle size of the graft rubbers, averaged over all of the graft rubbers (B) and (C), is in the range from 280 to 320 nm.

3. The molding composition according to claim 1 or 2, wherein component (A) comprises acrylonitrile as α,β-unsaturated monocarbonitrile, and styrene and/or α-methylstyrene as aromatic vinyl monomer.

4. The molding composition according to any of claims 1 to 3, wherein, in components (B) and (C), the α,β-unsaturated monocarboxylic ester is an alkyl acrylate or alkyl methacrylate respectively derived from an alcohol having from 1 to 8 carbon atoms.

5. The molding composition according to any of claims 1 to 4, wherein, in components (B) and (C), the aromatic vinyl monomer is styrene.

6. The molding composition according to any of claims 1 to 5, wherein, in components (B) and (C), the α,β-unsaturated monocarbonitrile is acrylonitrile.

7. A process for producing molding compositions according to any of claims 1 to 6, which comprises mixing, in the melt, components (A), (B), (C), and, if present, (D).

8. The use of molding compositions according to any of claims 1 to 6 for producing foils, moldings, or fibers.

9. A foil, a molding, or a fiber, comprising molding compositions according to any of claims 1 to 6.

## Revendications

1. Masse de moulage, comprenant
(A) 50 à 70% en poids d'un copolymère contenant, comme élément de base, au moins un nitrile d'acide monocarboxylique α,ß-insaturé en des quantités d'au moins 30% en poids, par rapport au poids total du composant (A), et au moins un monomère aromatique de vinyle, comme composant (A),
(B) 20 à 30% en poids d'un caoutchouc greffé présentant une grosseur moyenne des particules de 100 à 280 nm, contenant une base de greffage b1, formée à partir d'au moins un ester d'acide monocarboxylique α,ß-insaturé, et au moins une coquille greffée b2, formée à partir d'au moins un monomère aromatique de vinyle et d'au moins un nitrile d'acide monocarboxylique α,ß-insaturé, comme composant (B),
(C) 10 à 20% en poids d'un caoutchouc greffé présentant une grosseur moyenne des particules de 410 à 1000 nm, contenant une base de greffage c1, formée à partir d'au moins un ester d'acide monocarboxylique α,ß-insaturé, et au moins une coquille greffée c2, formée à partir d'au moins un polymère aromatique de vinyle et d'au moins un nitrile d'acide monocarboxylique α,ß-insaturé, comme composant (C),
(D) 0 à 10% en poids d'additifs comme composant (D), la somme des quantités des composants (A), (B), (C) et (D) valant 100% en poids, **caractérisée en ce que** le rapport pondéral du composant (B) au composant (C) se situe dans la plage de 3:1 à 1:1, et **en ce que** la teneur en nitrile d'acide monocarboxylique α,ß-insaturé dans le composant (B), en % en poids par rapport au poids total de la coquille greffée b2, et dans le composant (C), en % en poids par rapport au poids total de la coquille greffée c2, se situe à chaque fois 5 à 10 points de % sous la teneur en nitrile d'acide monocarboxylique α,β-insaturé du composant (A), en % en poids par rapport au poids total du composant (A).

2. Masse de moulage selon la revendication 1, **caractérisée en ce que** la grosseur des particules du caoutchouc greffé, en moyenne sur tous les caoutchoucs greffés (B) et (C), se situe dans la plage de 280 à 320 nm.

3. Masse de moulage selon la revendication 1 ou 2, **caractérisée en ce que** le composant (A) contient, comme nitrile d'acide monocarboxylique α,ß-insaturé, de l'acrylonitrile et, comme monomère aromatique de vinyle, du styrène et/ou de l'α-méthylstyrène.

4. Masse de moulage selon l'une quelconque des revendications 1 à 3, **caractérisée en ce que** dans les composants (B) et (C), l'ester d'acide monocarboxylique α,ß-insaturé est un ester alkylique de l'acide acrylique ou de l'acide méthacrylique dérivé d'un alcool comprenant 1 à 8 atomes de carbone.

5. Masse de moulage selon l'une quelconque des revendications 1 à 4, **caractérisée en ce que** dans les composants (B) et (C), le monomère aromatique de vinyle est le styrène.

6. Masse de moulage selon l'une quelconque des revendications 1 à 5, **caractérisée en ce que**, dans les composants (B) et (C), le nitrile d'acide monocarboxylique α,β-insaturé est l'acrylonitrile.

7. Procédé pour la préparation de masses de moulage selon l'une quelconque des revendications 1 à 6, **caractérisé en ce que** les composants (A), (B), (C) et le cas échéant (D) sont mélangés en masse fondue.

8. Utilisation de masses de moulage selon l'une quelconque des revendications 1 à 6 pour la production de feuilles, de corps moulés ou de fibres.

9. Feuilles, corps moulés ou fibres comprenant des masses de moulage selon l'une quelconque des revendications 1 à 6.
